# EUROPÄISCHE PATENTSCHRIFT

(11) **EP 2 919 634 B1**
(45) Veröffentlichungstag und Bekanntmachung des Hinweises auf die Patenterteilung: **18.01.2017**
(21) Anmeldenummer: 12794667.1
(22) Anmeldetag: 13.11.2012
(51) Int. Cl.: A47L 9/12, A47L 9/14, A47L 9/20, H02J 3/00, H02M 7/44, A47L 9/28

(54) **ENERGIEVERSORGUNGSVORRICHTUNG FÜR EINEN SAUGER UND SAUGER**
ELECTRIC POWER SUPPLY DEVICE FOR A VACUUM CLEANER
SYSTÈME D'ALIMENTATION POUR UN ASPIRATEUR

(43) Veröffentlichungstag der Anmeldung: 23.09.2015
(73) Patentinhaber: Alfred Kärcher GmbH & Co. KG, 71364 Winnenden (DE)
(72) Erfinder: FÖLL, Martin, 71364 Winnenden (DE); CANCAR, Josip, 70188 Stuttgart (DE)
(74) Vertreter: Hoeger, Stellrecht & Partner Patentanwälte mbB
(86) Internationale Anmeldenummer: PCT/EP2012/072525
(87) Internationale Veröffentlichungsnummer: WO 2014/075711

(56) Entgegenhaltungen:
- EP-B1- 1 017 149
- US-A1- 2005 040 920

## Beschreibung

Die Erfindung betrifft eine Energieversorgungsvorrichtung für einen Sauger, welcher wahlweise mit Gleichstrom oder Wechselstrom, insbesondere Netzstrom, betreibbar ist.

Aus der EP 1 017 149 B1 ist ein System mit/ohne Kabel für Elektrowerkzeuge bekannt, umfassend ein Niederspannungs-Gleichstrom-Elektrowerkzeug, das in einem vorausgewählten Spannungsbereich betrieben werden kann, wobei das Elektrowerkzeug ein elektrisches System für den Betrieb des Werkzeugs und eine vorausdefinierte elektrische Schnittstelle für die mechanische und elektrische Verbindung mit einem Stromversorgungsmodul umfasst. Es ist ein potentialbehaftetes Wandler-Stromversorgungsmodul mit Kabel vorgesehen, das mechanisch und elektrisch so ausgeführt ist, dass es mit einer elektrischen Stromquelle mit relativ hoher Spannung verbunden werden kann und dass es mit dem Niederspannungs-Gleichstrom-Elektrowerkzeug zusammenpasst, wobei das potentialbehaftete Stromversorgungsmodul mit Kabel angepasst ist, um den elektrischen Strom mit relativ hoher Spannung aus der elektrischen Stromquelle in eine Gleichstromspannung umzuwandeln, die von der elektrischen Stromquelle mit der relativ hohen Spannung nicht galvanisch getrennt ist und die sich innerhalb des vorausgewählten Spannungsbereichs befindet, der für den Antrieb des Niederspannungs-Gleichstrom-Elektrowerkzeugs geeignet ist. Das Elektrowerkzeug umfasst ein schutzisoliertes Gehäuse, dass das elektrische System umgibt, um die Leitung elektrischer Ladung vom Inneren ins Äußere des Elektrowerkzeugs zu verhindern.

Der Erfindung liegt die Aufgabe zugrunde, eine Energieversorgungsvorrichtung der eingangs genannten Art für einen Sauger bereitzustellen, welche den Betrieb des Saugers mit primärem Gleichstrom oder primärem Wechselstrom erlaubt und eine hohe elektrische Sicherheit im Fehlerfall aufweist.

Diese Aufgabe wird bei der eingangs genannten Energieversorgungsvorrichtung erfindungsgemäß dadurch gelöst, dass ein erster Anschluss vorgesehen ist, an welchen eine Gleichstromquelle anschließbar oder angeschlossen ist, ein zweiter Anschluss vorgesehen ist, an welchen eine Wechselstromquelle anschließbar oder angeschlossen ist, mindestens ein dritter Anschluss vorgesehen ist, an welchen ein oder mehrere Verbraucher des Saugers anschließbar oder angeschlossen sind, ein potentialgetrennter Wandler vorgesehen ist, welcher eingangsseitig elektrisch wirksam mit dem ersten Anschluss verbunden ist, und eine Umschalteinrichtung vorgesehen ist, welche mit einem Ausgang des Wandlers elektrisch wirksam verbunden ist, mit dem zweiten Anschluss verbunden ist und mit dem mindestens einen Verbraucher verbunden ist, wobei durch die Umschalteinrichtung schaltbar ist, ob der mindestens eine Verbraucher für die Energieversorgung wirksam mit dem Wandler oder dem zweiten Anschluss verbunden ist, und wobei die Umschalteinrichtung ein oder mehrere Bauteile mit jeweiligem elektrischen Sicherheitsabstand aufweist und der Sicherheitsabstand eines solchen Bauteils bezüglich der Kriechstrecke mindestens 4 mm beträgt und die Summe der Kriechstrecken der Bauteile mindestens 8 mm beträgt.

Durch die erfindungsgemäße Energieversorgungsvorrichtung lässt sich der Sauger wahlweise aus einer Gleichstromquelle wie insbesondere einer Batterieeinrichtung betreiben oder aus einer Wechselstromquelle betreiben und insbesondere mit Netzstrom betreiben. Bei dem Betrieb mit der Gleichstromquelle stellt der Wandler einen Gleichstrom oder Wechselstrom bereit. Der Wandler setzt insbesondere die Spannung hoch.

Der potentialgetrennte Wandler sorgt dafür, dass im Fehlerfall ein von der Wechselstromquelle bereitgestellter Wechselstrom nicht an den ersten Anschluss und insbesondere an Batteriekontakte durchschlagen kann.

Die Umschalteinrichtung, welche insbesondere ein oder mehre Relais, Schütze oder Schalter umfasst, sorgt dafür, dass beim Betrieb mit der Gleichstromquelle in einem Störfall die gewandelte Gleichspannung nicht an den zweiten Anschluss durchschlagen kann. Der elektrische Sicherheitsabstand verhindert einen entsprechenden Durchschlag.

Die Umschalteinrichtung weist in der Summe eine Kriechstrecke von mindestens 8 mm auf, wobei diejenigen Bauteile, die für den Sicherheitsabstand sorgen und eine jeweilige Kriechstrecke aufweisen, einen Sicherheitsabstand bezüglich der Kriechstrecke von mindestens 4 mm haben. Dies lässt sich auf unterschiedliche Weise realisieren. Beispielsweise ist nur ein Bauteil mit Kriechstrecke vorhanden. Diese Kriechstrecke muss dann mindestens 8 mm betragen. Es ist beispielsweise auch möglich, dass (mindestens) zwei Bauteile vorhanden sind, welche jeweils eine Kriechstrecke von mindestens 4 mm aufweisen. Das eine Bauteil stellt dann eine Basisisolierung bereit und das andere Bauteil eine Zusatzisolierung. Die Gesamtkriechstrecke ist bezogen auf die beiden Bauteile dann mindestens 8 mm.

Die Kriechstrecke ist definiert als kürzeste Entfernung entlang der Oberfläche eines Isolierstoffs zwischen zwei leitenden Teilen. Insbesondere ist bezüglich Bauteilen der Umschalteinrichtung die Kriechstrecke die kürzeste Entfernung entlang der Oberfläche eines Isolierstoffs zwischen Anschlusskontakten.

Die erfindungsgemäße Energieversorgungsvorrichtung lässt sich mit einer relativ geringen Anzahl an Bauteilen realisieren. Es lässt sich eine hohe elektrische Sicherheit erreichen.

Es lässt sich ferner eine hohe elektrische Schutzwirkung erreichen, wenn der Sicherheitsabstand bezüglich Luftstrecke eines Bauteils mindestens 2 mm beträgt und die Summe der Luftstrecken der Bauteile mindestens 4 mm beträgt. Die Luftstrecke ist definiert als kürzeste Entfernung in der Luft zwischen zwei leitenden Teilen. Insbesondere ist in der Umschalteinrichtung bezüglich eines jeweiligen Bauteils die Luftstrecke bezogen auf Schaltkontakte. Die Luftstrecke zwischen Kontakten kann kleiner sein als die Kriechstrecke, da bei der Kriechstrecke die Oberflächenkontur relevant ist.

Die Luftstrecke von mindestens 4 mm kann auch wiederum auf unterschiedliche Weise realisiert werden. Beispielsweise ist nur ein einziges bezüglich des Sicherheitsabstands relevantes Bauteil vorgesehen, welches eine individuelle Luftstrecke von mindestens 4 mm aufweist. Es ist auch möglich, dass (mindestens) zwei Bauteile vorhanden sind, welche jeweils eine individuelle Luftstrecke von mindestens 2 mm aufweisen. Dies ergibt in der Summe wiederum eine Luftstrecke von mindestens 4 mm.

Günstig ist es, wenn bei einer Mehrzahl von Bauteilen mindestens zwei Bauteile bezogen auf den zweiten Anschluss in Reihe geschaltet sind. Dadurch lässt sich auf effektive Weise ein Durchlag auf den zweiten Anschluss verhindern, wobei sich Sicherheitsabstände der Bauteile summieren.

Bei einer Ausführungsform weist die Umschalteinrichtung mindestens ein Bauteil, wie beispielsweise eine Relais auf, durch welches schaltbar ist, ob der dritte Anschluss entweder in für die Energieversorgung wirksamer Verbindung mit dem zweiten Anschluss oder dem Ausgang des Wandlers steht. Durch die Umschalteinrichtung, welche insbesondere durch eine Steuerungseinrichtung angesteuert ist, wird dann geschaltet, mit welcher primären Stromquelle der Verbraucher versorgt wird.

Insbesondere umfasst die Umschalteinrichtung mindestens ein Relais und/oder ein Schütz und/oder einen Schalter. Der Sicherheitsabstand lässt sich dann auf einfache Weise in die Umschalteinrichtung durch die Bereitstellung einer entsprechenden Kriechstrecke und einer entsprechenden Luftstrecke realisieren.

Bei einer Ausführungsform weist die Umschalteinrichtung mindestens ein (erstes) Bauteil als elektrische Basisisolierung und mindestens ein weiteres Bauteil als zusätzliche elektrische Isolierung auf. Dadurch lässt sich auf einfache Weise mit einer geringen Zahl von Bauteilen eine hohe elektrische Isolierung für den Fehlerfall realisieren.

Bei einer konstruktiv einfachen Ausführungsform hat das mindestens eine weitere Bauteil eine Durchschaltfunktion ohne Umschaltfunktion. Es lässt sich dadurch als "einfacher" Schalter realisieren.

Günstig ist es, wenn Kontakte der Umschalteinrichtung, welche für eine Schaltfunktion erforderlich sind, an einem Träger, insbesondere einer Platine, angeordnet sind und eine Kriechstrecke (Kontaktabstand) zwischen den Kontakten durch eine oder mehrere Ausnehmungen zwischen den Kontakten und insbesondere durch eine oder mehrere durchgehenden Ausnehmungen an dem Träger gebildet sind. Dadurch lässt sich auf einfache Weise ein den Sicherheitsabstand bestimmender Kontaktabstand realisieren.

Insbesondere beträgt eine für eine Kriechstrecke maßgebende Abmessung der mindestens einen Ausnehmung bezogen auf einen Abstand zwischen beabstandeten Kontakten (welche für die Schaltfunktion wirksam sind) mindestens 4 mm. Dadurch kann auf einfache Weise der Sicherheitsabstand der Umschalteinrichtung realisiert werden.

Der potentialgetrennte Wandler trennt eine Wechselspannungsseite mit der Wechselstromquelle von der Gleichstromquelle. Wenn ein oder mehrere Verbraucher des Saugers mit Wechselspannung von der Wechselstromquelle betrieben werden, dann wird im Fehlerfall ein Durchschlag auf Kontakte der Gleichstromquelle verhindert.

Günstigerweise trennt die Umschalteinrichtung mit dem Sicherheitsabstand eine Gleichspannungsseite mit der Gleichstromquelle von der Wechselstromquelle. Wenn der oder die Verbraucher des Saugers primär über die Gleichstromquelle betrieben werden, dann verhindert die entsprechende Umschalteinrichtung im Fehlerfall einen Durchschlag der gewandelten Gleichspannung auf den zweiten Anschluss.

Bei einer Ausführungsform stellt der Wandler eine Gleichspannung oder Wechselspannung von 100 V oder mehr bereit und stellt insbesondere eine Gleichspannung oder Wechselspannung von 140 V oder mehr bereit für einen Abreinigungsvorgang an dem Sauger. Dadurch lässt sich eine Filterabreinigung des Saugers auch beim Primärbetrieb mit der Gleichstromquelle durchführen.

Insbesondere ist die Gleichstromquelle eine wiederaufladbare Batterieeinrichtung mit einem oder mehreren Akkumulatoren.

Die Erfindung betrifft ferner einen Sauger, insbesondere Staubsauger, umfassend einen Saugeinlass, einen Schmutzsammelbehälter, eine Filtereinrichtung, eine Absaugleitung und ein Saugaggregat, wobei der Schmutzsammelbehälter über die Filtereinrichtung und die Absaugleitung mit dem Saugaggregat in Strömungsverbindung steht und die Filtereinrichtung vom Saugaggregat mit Unterdruck beaufschlagt ist.

Erfindungsgemäß weist der Sauger eine erfindungsgemäße Energieversorgungsvorrichtung auf.

Insbesondere ist eine Abreinigungseinrichtung für die Filtereinrichtung vorgesehen, durch welche eine vorzugsweise automatische Abreinigung der Filtereinrichtung möglich ist.

Günstig ist es, wenn ein Verbraucher des Saugers eine Elektromotoreinrichtung des Saugaggregats und/oder eine Abreinigungseinrichtung für die Filtereinrichtung ist. Es können auch weitere Komponenten des Saugers über die Energieversorgungsvorrichtung mit elektrischer Energie versorgt werden.

Es kann vorgesehen sein, dass ein oder mehrere Energieverbraucher des Saugers alternativ durch Gleichstrom oder Wechselstrom betreibbar sind. Beispielsweise umfasst das Saugaggregat des Saugers einen Universalmotor als Elektromotor, der sowohl mit Gleichstrom als auch mit Wechselstrom betreibbar ist. Dadurch kann als potentialgetrennter Wandler ein Wandler eingesetzt werden, welcher einen hochgesetzten Gleichstrom bereitstellt.

Die nachfolgende Beschreibung dient im Zusammenhang mit den Zeichnungen der näheren Erläuterung der Erfindung. Es zeigen:
- Figur 1: eine schematische Schnittansicht eines Ausführungsbeispiels eines Staubsaugers;
- Figur 2: eine vergrößerte Darstellung einer Fremdluftventileinrichtung des Staubsaugers gemäß Figur 1;
- Figur 3: ein Blockschaltbild einer Steuerungseinrichtung des Staubsaugers gemäß Figur 1;
- Figur 4: eine schematische Blockschaltbilddarstellung einer Energieversorgungsvorrichtung des Staubsaugers gemäß Figur 1; und

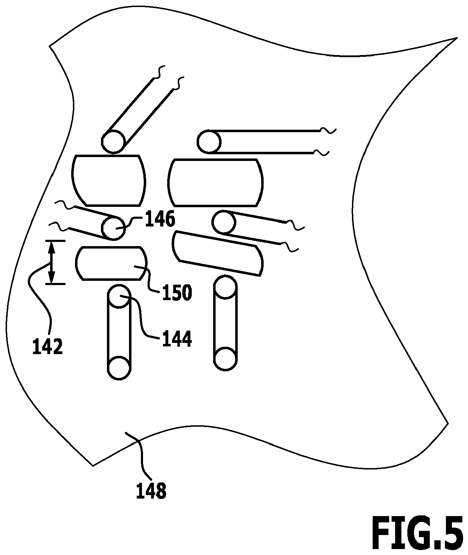

- Figur 5: einen Ausschnitt eines Trägers, auf dem zumindest ein Teil der Energieversorgungsvorrichtung gemäß Figur 4 angeordnet ist.

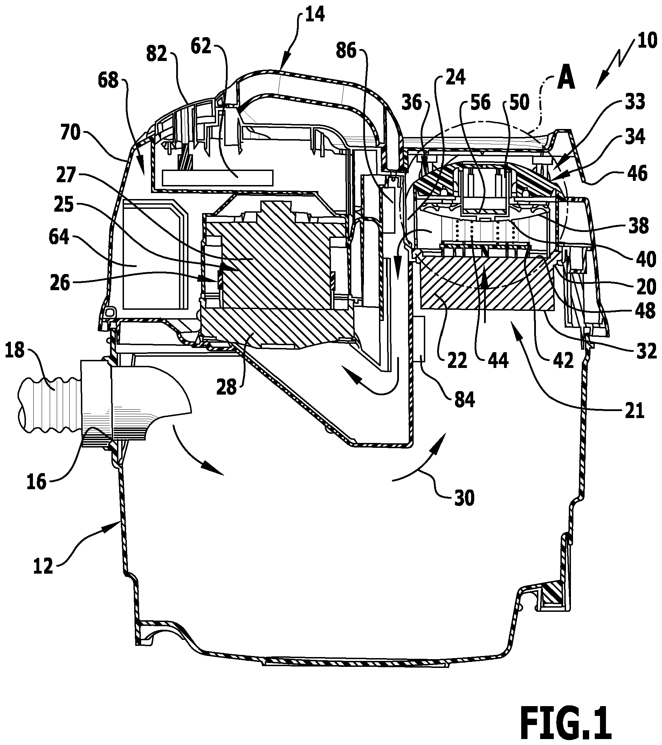

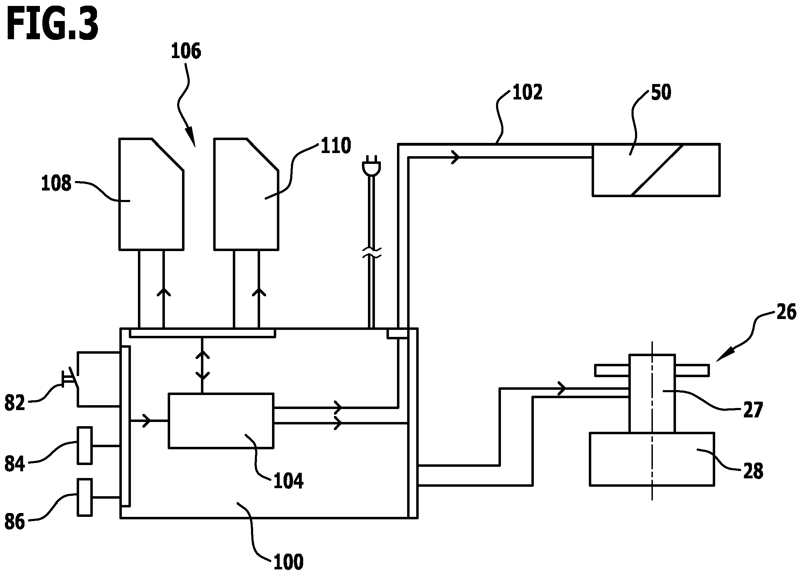

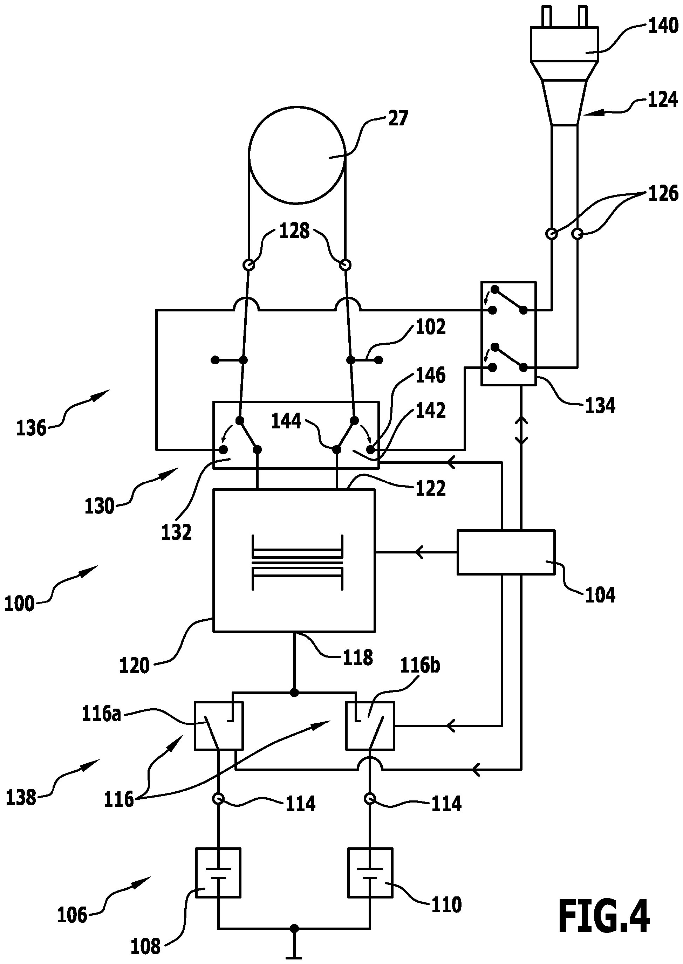

Ein Ausführungsbeispiel eines Staubsaugers 10 als Sauger, welches in Figur 1 in einer Schnittansicht schematisch dargestellt ist, weist einen Schmutzsammelbehälter 12 auf, auf den ein Saugkopf 14 aufgesetzt ist. Der Schmutzsammelbehälter 12 weist einen Saugeinlass 16 auf, an den in üblicher Weise ein Saugschlauch 18 angeschlossen werden kann. Der Saugkopf 14 dichtet den Schmutzsammelbehälter 12 oberseitig ab und bildet einen Saugauslass 20 aus, an dem eine Filtereinrichtung 21 mit (mindestens) einem Filter 22 gehalten ist. An das Filter 22 schließt sich eine Absaugleitung 24 an, über die der Schmutzsammelbehälter 12 mit einem Saugaggregat 26 in Strömungsverbindung steht. Das Saugaggregat 26 umfasst eine Elektromotoreinrichtung 25 mit (mindestens) einem Elektromotor 27 und ein vom Elektromotor 27 drehend angetriebenes Gebläse 28. Die Elektromotoreinrichtung 25 wird über eine Energieversorgungsvorrichtung 100 (Figuren 3, 4) mit elektrischer Energie versorgt.

Der Schmutzsammelbehälter 12 wird im Betrieb des Staubsaugers 10 vom Saugaggregat 26 mit Unterdruck beaufschlagt, sodass sich eine in Figur 1 durch die Pfeile 30 dargestellte Saugströmung ausbildet. Unter der Wirkung der Saugströmung 30 kann mit Schmutz beladene Saugluft über den Saugeinlass 16 in den Schmutzsammelbehälter 12 eingesaugt werden, die dann vom Saugaggregat 26 abgesaugt werden kann. Die Saugluft kann vom Saugaggregat 26 über in der Zeichnung nicht dargestellte, dem Fachmann an sich bekannte Abluftöffnungen des Saugkopfes 14 an die Umgebung abgegeben werden.

Die Saugluft durchströmt das Filter 22, sodass sich mitgeführte Feststoffpartikel auf der dem Schmutzsammelbehälter 12 zugewandten Schmutzseite 32 des Filters 22 ablagern. Es ist deshalb erforderlich, das Filter 22 von Zeit zu Zeit abzureinigen, da es ansonsten einen zunehmenden Strömungswiderstand ausbildet, wodurch die Saugwirkung des Staubsaugers 10 beeinträchtigt wird.

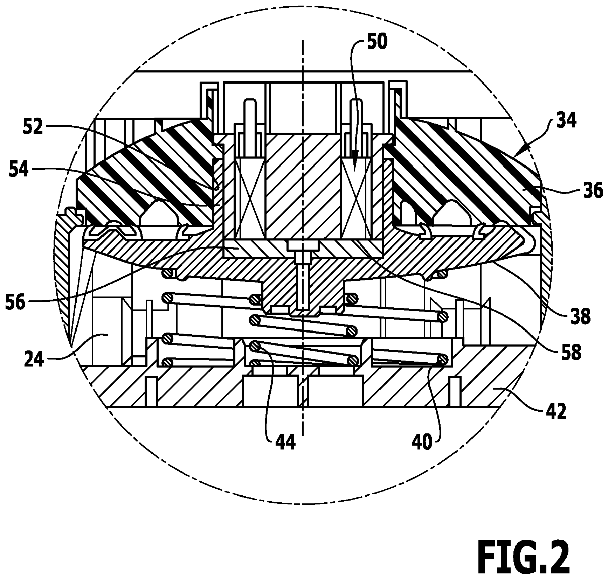

Zur Abreinigung des Filters 22 ist oberhalb des Filters 22 im Saugkopf 14 eine Fremdluftventileinrichtung 33 mit (mindestens) einem Fremdluftventil 34 angeordnet (in Figur 2 vergrößert dargestellt). Es umfasst eine ortsfest im Saugkopf 14 angeordnete Ventilhalterung 36, die einen Ventilsitz ausbildet für einen beweglichen Ventilkörper in Form eines Ventiltellers 38. Der Ventilteller 38 ist mittels einer Schließfeder 40 mit einer Schließkraft in Richtung auf die Ventilhalterung 36 beaufschlagt. Die Schließfeder 40 ist zwischen einer plattenartigen, eine Vielzahl von Strömungsdurchlässen aufweisenden, ortsfest im Saugkopf 14 angeordneten Filterhalterung 42 und dem Ventilteller 38 eingespannt. Zusätzlich zur Schließfeder 40 trägt die Filterhalterung 42 ein federndes Anschlagelement in Form einer Anschlagfeder 44. Diese weist insbesondere (vorzugsweise ebenso wie die Schließfeder 40) eine lineare Kennlinie auf. Sie ist beispielsweise als Schraubenfeder ausgebildet. Im Gegensatz zur Schließfeder 40 steht die Anschlagfeder 44 in der Schließstellung des Ventiltellers 38 nicht unter Vorspannung. Erst wenn sich der Ventilteller 38 vom Ventilsitz der Ventilhalterung 36 abhebt, gelangt die Anschlagfeder 44 an der Unterseite des Ventiltellers 38 zur Anlage und wird bei einer weiteren Bewegung des Ventiltellers 38 etwas zusammengedrückt. Sie übt dadurch eine zunehmende Rückstellkraft auf den Ventilteller 38 aus und beschleunigt die Bewegung des Ventiltellers 38 ausgehend von seiner (in Figur 2 dargestellten) geschlossenen Ventilstellung über eine geöffnete Ventilstellung wieder zurück in die geschlossene Ventilstellung. In der geöffneten Ventilstellung nimmt der Ventilteller 38 einen Abstand zu der Ventilhalterung 36 ein, die den Ventilsitz ausbildet.

Die Ventilhalterung 36 weist eine Vielzahl von in der Zeichnung nicht dargestellten Durchgangsöffnungen auf, deren Mündungsbereiche vom Ventilteller 38 verschlossen werden, wenn dieser seine geschlossene Ventilstellung einnimmt. In Höhe der Ventilhalterung 36 weist der Saugkopf 14 eine seitliche Öffnung 46 auf. Über die seitliche Öffnung 46 kann Fremdluft in die Durchgangsöffnungen der Ventilhalterung 36 einströmen. Nimmt der Ventilteller 36 seine zur Ventilhalterung 36 beabstandete offene Ventilstellung ein, so steht die seitliche Öffnung 46 über die Durchgangsöffnungen der Ventilhalterung 36 mit der Absaugleitung 24 in Strömungsverbindung und Fremdluft kann die dem Schmutzsammelbehälter 12 abgewandte Reinseite 48 des Filters 22 beaufschlagen. Nimmt der Ventilteller 38 seine geschlossene Ventilstellung ein, so ist die Strömungsverbindung zwischen der seitlichen Öffnung 46 und der Absaugleitung 24 unterbrochen.

In einem zentralen Bereich trägt die Ventilhalterung 36 einen Elektromagneten 50. In Umfangsrichtung ist der Elektromagnet 50 von einem Ringraum 52 umgeben, in den eine oberseitig an den Ventilteller 38 angeformte Führungshülse 54 eintaucht. Die Führungshülse 54 nimmt ein magnetisierbares Element beispielsweise in Form einer Eisenplatte 56 auf, die in der geschlossenen Ventilstellung des Ventiltellers 38 an einer freien Stirnkante 58 des Elektromagneten 50 anliegt und in Kombination mit dem Elektromagneten 50 einen geschlossenen Magnetkreis ausbildet.

Der Elektromagnet 50 steht über eine Stromversorgungsleitung 102 (Figur 3) mit einer im Saugkopf 14 angeordneten Energieversorgungsvorrichtung 100 in elektrischer Verbindung. Von der Energieversorgungsvorrichtung 100 wird der Elektromagnet 50 während des normalen Saugbetriebs des Staubsaugers 10 mit einem Versorgungsstrom beaufschlagt. Zur Steuerung ist eine elektrische Steuerungseinrichtung 104 vorgesehen. Aufgrund des sich ausbildenden Magnetfelds wird der Ventilteller 38 zuverlässig in seiner Schließstellung gehalten. Die Haltekraft des Elektromagneten 50 wird von der Federkraft der Schließfeder 40 unterstützt.

In Figur 3 sind Energieversorgungsleitungen ohne Pfeil und Signalleitungen mit Pfeil angedeutet.

Wird die Stromversorgung des Elektromagneten 50 von der Steuerungseinrichtung 104 unterbrochen, so entfällt die auf den Ventilteller 38 einwirkende magnetische Haltekraft und der Ventilteller 38 wird aufgrund der auf ihn einwirkenden Druckdifferenz, die sich aus dem Außendruck der im Bereich der Ventilhalterung 36 vorliegenden Fremdluft und dem Innendruck innerhalb der Absaugleitung 24 ergibt, entgegen der Wirkung der Schließfeder 40 vom Ventilsitz abgehoben. Fremdluft kann dann schlagartig durch die Durchgangsöffnungen der Ventilhalterung 36 hindurch in die Absaugleitung 24 einströmen und das Filter 22 wird auf seiner Reinseite 48 schlagartig mit Fremdluft beaufschlagt. Dies führt zu einer mechanischen Erschütterung des Filters 22. Außerdem wird das Filter 22 in Gegenstromrichtung, das heißt entgegen der während des normalen Saugbetriebs herrschenden Strömungsrichtung 30, von Fremdluft durchströmt. Dies hat eine wirkungsvolle Abreinigung des Filters 22 zur Folge.

Die Energieversorgung des Staubsaugers 10 erfolgt mit Hilfe der Energieversorgungsvorrichtung 100. Diese umfasst eine Gleichstromquelle 106 mit beispielsweise zwei wiederaufladbaren Batterien 108, 110. Die Batterien 108, 110 sind beispielsweise Lithium-Ionen-Akkumulatoren. Diese sind bei einer Ausführungsform seitlich neben dem Saugaggregat 26 in einem Batteriefach 68 des Saugkopfes 14 angeordnet. Das Batteriefach 68 ist über eine nach außen schwenkbare Klappe 70 dem Benutzer zum Auswechseln der Batterien 108, 110 zugänglich.

Die Energieversorgungsvorrichtung 100 und die elektronische Steuerungseinrichtung 104 sind bei einer Ausführungsform oberhalb des Saugaggregates 26 im Saugkopf 14 angeordnet. Eingangsseitig ist an die Steuereinrichtung 102 ein vom Benutzer manuell betätigbarer Taster 82 angeschlossen, der an der Oberseite des Saugkopfes 14 angeordnet ist. Durch Betätigen des Tasters 82 kann der Benutzer (manuell) eine Filterabreinigung beispielsweise auslösen oder abschalten bzw. anschalten, je nachdem, welche Funktion dem Taster 82 zugeordnet ist.

Die Batterieeinrichtung kann auch eine Lüftereinrichtung zum Kühlen der Batterien 108, 110 umfassen (in der Zeichnung nicht gezeigt). Wenn als Batterien Akkumulatoren verwendet werden, die einer Kühlung bedürfen, dann lässt sich ein akkuschonender Betrieb realisieren. Die Lüftereinrichtung wiederum erhält ihre elektrische Energie zum Betrieb vorzugsweise aus den Batterien 108, 110, wenn ein Batteriebetrieb vorliegt.

Bei einer Ausführungsform ist die elektronische Steuerungseinrichtung 104 an einer Platine angeordnet. An der Platine ist weiterhin eine Aufnahme für die Gleichstromquelle 106 angeordnet. Die Aufnahme nimmt insbesondere die Batterien 108, 110 auf. Auch eine Lüftereinrichtung der Gleichstromquelle 106 kann an der Aufnahme angeordnet sein.

Die Steuerungseinrichtung 104 umfasst auch eine Elektronik für die Steuerung und/oder Regelung und/oder Überwachung der Gleichstromquelle 106. Durch die Steuerungseinrichtung 104, über welche die Elektromotoreinrichtung 25 angesteuert ist, lässt sich beispielsweise die Lüftereinrichtung so steuern, dass diese entsprechend der Ansteuerung der Elektromotoreinrichtung 25 betrieben wird. Beispielsweise wird bei einem Abschalten des Elektromotors 27, welcher durch die Steuerungseinrichtung 62 angesteuert ist, auch die Lüftereinrichtung abgeschaltet (gegebenenfalls mit Zeitverzögerung). Beispielsweise ist es auch möglich, die Lüftereinrichtung abzuschalten, wenn ein Filterabreinigungsbetrieb durchgeführt wird.

Ferner kann dann über die Steuerungseinrichtung 104 eine Steuerung durchgeführt werden, die einen schonenden Betrieb der Gleichstromquelle 106 erlaubt mit Optimierung auf Maximierung der Batteriekapazität. Beispielsweise lässt sich dann über die Steuerungseinrichtung 104 auch ein Aufladevorgang der Batterien 108, 110 über ein Ladegerät (in der Zeichnung nicht gezeigt) entsprechend steuern oder überwachen. Ferner lässt sich über die Steuerungseinrichtung 104 die "Alterung" der Batterien 108, 110 überwachen.

Alternativ oder ergänzend kann vorgesehen sein, dass stromaufwärts des Filters 22 ein erster Drucksensor 84 und stromabwärts des Filters 22 ein zweiter Drucksensor 86 angeordnet sind, die an die Steuerungseinrichtung 104 signalwirksam angeschlossen sind und jeweils ein druckabhängiges Steuersignal bereitstellen. Mittels der beiden Drucksensoren 84 und 86 kann die sich am Filter 22 einstellende Druckdifferenz ermittelt werden. Je mehr Feststoffpartikel sich am Filter 22 abscheiden, desto größer ist der Strömungswiderstand des Filters 22 und desto größer ist auch die sich einstellende Druckdifferenz. Erreicht die Druckdifferenz einen vorgebbaren Wert, so kann die Steuerungseinrichtung 62 selbsttätig (automatisch) eine Filterabreinigung auslösen.

Alternativ oder ergänzend kann vorgesehen sein, dass die Steuerungseinrichtung 104 unabhängig von den herrschenden Druckverhältnissen und unabhängig von der möglichen Betätigung des Tasters 82 in gleich bleibenden oder unterschiedlichen Zeitabständen selbsttätig (automatisch) eine Filterabreinigung auslöst.

Wie bereits erwähnt, erfolgt eine Filterabreinigung dadurch, dass die Stromversorgung des Elektromagneten 50 von der Steuereinrichtung 104 kurzzeitig unterbrochen wird.

Ein Ausführungsbeispiel eines zeitlichen Verlaufs des von der Steuerungseinrichtung 104 dem Elektromagneten 50 bereitgestellten Versorgungsstromes ist in der PCT/EP2011/052039 vom 11. Februar 2011 beschrieben, auf die ausdrücklich und vollinhaltlich Bezug genommen wird: Zu einem Zeitpunkt t₂ (siehe Figur 4 in der PCT/EP2011/052039) wird die Stromversorgung des Elektromagneten 50 unterbrochen, sodass das Fremdluftventil 34 ausgehend von seiner geschlossenen Ventilstellung in seine geöffnete Ventilstellung übergeht, und zu einem nachfolgenden Zeitpunkt t₃ wird die Stromversorgung des Elektromagneten 50 wieder bereitgestellt, sodass das Fremdluftventil 34 wieder seine geschlossene Ventilstellung einnimmt. Die Unterbrechung der Stromversorgung erfolgt im dargestellten Ausführungsbeispiel dreimal kurz hintereinander, sodass die Reinseite 48 des Filters 22 dreimal hintereinander schlagartig mit Fremdluft beaufschlagt wird, die zu einem großen Teil das Filter 22 in Gegenstromrichtung durchströmt. An der Schmutzseite 32 anhaftende Feststoffpartikel lösen sich dadurch ab. Mit dem Ende der dritten Stromunterbrechung, also zu einem Zeitpunkt t_{E}, ist der Abreinigungsvorgang beendet.

Ein kompletter Abreinigungsvorgang umfasst bei einem solchen Ausführungsbeispiel also drei Öffnungs- und Schließbewegungen des Fremdluftventils kurz hintereinander. Die Länge des Zeitintervalls zwischen den Zeitpunkten t₂ und t₃ kann beispielsweise 90 Millisekunden betragen. Nach einem Abreinigungsvorgang stellt sich wieder der normale Saugbetrieb ein, in dem der Elektromagnet 50 von der Steuerungseinrichtung 62 mit dem Versorgungsstrom beaufschlagt wird und das Fremdluftventil 34 seine geschlossene Ventilstellung beibehält. Die Saugleistung des Saugaggregats 26 wird während des normalen Saugbetriebs konstant gehalten. Bei zeitgesteuerter Filterabreinigung erfolgt nach einem Saugbetrieb von beispielsweise 15 Sekunden erneut ein Abreinigungsvorgang mit dreimaliger schlagartiger Fremdluftzufuhr, wie dies voranstehend erläutert wurde. Die Länge des Zeitintervalls zwischen zwei Abreinigungsvorgängen ist bevorzugt manuell einstellbar. Alternativ oder ergänzend kann ein Abreinigungsvorgang manuell mittels des Tasters 82 und/oder sensorgesteuert mittels der Drucksensoren 84, 86 ausgelöst werden.

Die Steuerungseinrichtung 104 steuert die Betriebsabläufe des Staubsaugers 10. Sie steuert auch zumindest mit einer Untereinheit die Energieversorgungsvorrichtung 100. Die Steuerungseinrichtung 104 kann Teil der Energieversorgungsvorrichtung 100 sein oder getrennt von dieser sein.

Ein Ausführungsbeispiel einer erfindungsgemäßen Energieversorgungsvorrichtung 100, welche in Figur 4 schematisch in einer Blockschaltbilddarstellung gezeigt ist, umfasst einen ersten Anschluss 114, an welchen die Gleichstromquelle 106 (insbesondere mit den Batterien 108, 110) anschließbar ist oder angeschlossen ist. Die Verbindung der Gleichstromquelle 106 an dem ersten Anschluss 114 kann dabei fest oder lösbar sein.

Dem ersten Anschluss 114 ist eine Schalteinrichtung 116 zugeordnet. Diese Schalteinrichtung steht in Verbindung mit einem Eingang eines potentialgetrennten Wandlers 120. Der Wandler 120 setzt die Spannung hoch; er ist ein Aufwärtswandler. Er umfasst insbesondere einen oder mehrere Transformatoren und entsprechende elektronische Bauteile. Er unterliegt insbesondere der Norm EN 61558.

Die Schalteinrichtung 116 ist durch die Steuerungseinrichtung 104 angesteuert. Bei einer geschlossenen Schaltstellung der Schalteinrichtung 116 liegt an dem Eingang 118 des Wandlers 120 die von der Gleichstromquelle 106 gelieferte Gleichspannung an. Bei einer offenen Schaltstellung der Schalteinrichtung 116 liegt an dem Eingang 118 ein Nullpotential an. Die Schaltstellung der Schalteinrichtung 116 wird über die Steuerungseinrichtung 104 eingestellt.

Bei einem Ausführungsbeispiel, bei dem die Gleichstromquelle 106 eine Mehrzahl von Batterien 108, 110 umfasst, weist die Schalteinrichtung 116 den jeweiligen Batterien zugeordnete Schalter 116a, 116b usw. auf. Es sind dadurch Schaltstränge gebildet mit jeweils einem Schalter 116a, 116b usw. und der zugeordneten Batterie 108, 110, wobei jeder Schaltstrang insbesondere individuell schaltbar ist.

Der potentialgetrennte Wandler 120 weist einen Ausgang 122 auf. Der Wandler 120 wandelt bei einem Ausführungsbeispiel die durch die Gleichstromquelle 106 bereitgestellte Gleichspannung in eine (nutzbare) Gleichspannung, welche an dem Ausgang 122 abgreifbar ist.

Es ist grundsätzlich auch möglich, dass ein entsprechend ausgebildeter Wandler 120 eine (nutzbare) Wechselspannung bereitstellt.

Der Staubsauger 10 ist alternativ zum Betrieb mit der Gleichstromquelle 106 auch über eine primäre Wechselstromquelle 124 betreibbar. Er ist insbesondere über Netzstrom betreibbar. Dazu weist die Energieversorgungsvorrichtung 100 einen zweiten Anschluss 126 auf. An diesen zweiten Anschluss ist die Wechselstromquelle 124 anschließbar bzw. angeschlossen.

Der Elektromotor 27 ist bei einer Ausführungsform ein Universalmotor. Er ist dann alternativ mit Gleichstrom oder Wechselstrom betreibbar.

Die Energieversorgungsvorrichtung 100 weist ferner (mindestens) einen dritten Anschluss 128 auf, an welchen ein oder mehrere Verbraucher des Staubsaugers 10 anschließbar bzw. angeschlossen sind. In Figur 4 ist der Elektromotor 27 mit dem dritten Anschluss 128 verbunden.

Mit dem dritten Anschluss 128 (bzw. mit einem weiteren Verbraucheranschluss) ist auch der Elektromagnet 50 über die Stromversorgungsleitung 102 verbunden.

Die Energieversorgungsvorrichtung 100 weist eine als Ganzes mit 130 bezeichnete Umschalteinrichtung auf. Durch diese Umschalteinrichtung 130 ist einstellbar, ob der oder die Verbraucher des Staubsaugers 10, wie insbesondere der Elektromotor 27, über Wechselstrom versorgt werden, welcher durch die Wechselstromquelle 124 bereitgestellt ist, oder über Gleichstrom versorgt werden, welcher von der Gleichstromquelle 106 bereitgestellt ist und durch den Wandler 120 ("aufwärts") gewandelt wurde.

Die Umschalteinrichtung 130 weist Kontakte auf, welche je nach Schaltstellung elektrisch verbunden oder elektrisch getrennt sind. Insbesondere ist eine Schaltstellung vorgesehen, bei welcher Wechselstrom von der Wechselstromquelle 124 den oder die Verbraucher versorgt und der Verbraucher von dem Ausgang 122 des Wandlers 120 entkoppelt ist, und weist eine weitere Schaltstellung auf, bei welcher der mindestens eine Verbraucher über an dem Ausgang 122 des Wandlers 120 anstehende Wechselspannung versorgt wird und die Wechselstromquelle 124 von dem mindestens einen Verbraucher entkoppelt ist.

In Figur 4 ist die letztere Schaltstellung gezeigt, bei welcher die Gleichstromquelle 106 nach Wandlung an dem Wandler 120 den für den Betrieb des Verbrauchers 27 benötigten Wechselstrom bereitstellt.

Grundsätzlich kann die Umschalteinrichtung durch die Steuerungseinrichtung 104 angesteuert sein. Beispielsweise wird detektiert, wenn die Wechselstromquelle 124 angeschlossen ist wie beispielsweise ein Netzanschluss vorliegt. In diesem Fall kann dann die Steuerungseinrichtung 104 dafür sorgen, dass die Umschalteinrichtung 130 auf die Schalteinstellung gestellt wird, bei welcher die Wechselstromquelle 124 den Verbraucherstrom bereitstellt.

Grundsätzlich ist auch eine manuelle Einstellung auf Betrieb mit der Wechselstromquelle 124 oder der Gleichstromquelle 106 möglich, wobei die Umschalteinrichtung 130 dann die entsprechenden Steuersignale durch die Steuerungseinrichtung 104 erhält.

Bei einem Ausführungsbeispiel ist die Umschalteinrichtung 130 mehrteilig ausgebildet. Sie umfasst ein erstes Bauteil 132 insbesondere in der Form eines Relais oder eines Schützes, welches in direkter Verbindung mit dem Ausgang 122 des Wandlers 120 steht. An den dritten Anschluss 128 ist das erste Bauteil 132 über ein zweites Bauteil 134 angeschlossen. Das erste Bauteil 132 hat bei einem Ausführungsbeispiel eine Umschaltfunktion. Das zweite Bauteil 134 hat eine Durchschaltfunktion ohne Umschaltfunktion. Bezüglich des zweiten Anschlusses 126 sind das erste Bauteil 132 und das zweite Bauteil 134 in Reihe geschaltet.

Bei einer ersten Schaltstellung des zweiten Bauteils 134 ist der Stromfluss zu dem ersten Bauteil 132 von der Wechselstromquelle 124 her unterbrochen. Bei einer zweiten Schaltstellung ist dieser Stromfluss ermöglicht. In Figur 4 ist die erste Schaltstellung gezeigt.

Das erste Bauteil 132 weist eine erste Schaltstellung auf, in welcher die Energieversorgung des Verbrauchers 27 über gewandelte Gleichspannung der Gleichstromquelle 106 erfolgt. In einer zweiten Schaltstellung erfolgt die Energieversorgung über die Wechselstromquelle 124. In Figur 4 ist die erste Schaltstellung gezeigt.

Bei diesem Ausführungsbeispiel stellt das erste Bauteil 132, wie untenstehend noch näher erläutert wird, eine elektrische Basisisolierung bereit. Das zweite Bauteil 134 stellt eine elektrische Zusatzisolierung bereit.

Bei einem konkreten Ausführungsbeispiel ist die Wechselstromquelle 124 Netzstrom von 230 V. Die Gleichstromquelle 106 stellt an dem Eingang 118 eine Gleichspannung von 36 V bereit.

Der Wandler 120 wandelt auf eine Spannung von mindestens 100 V (Gleichspannung) und insbesondere mindestens 140 V (Gleichspannung). Insbesondere ist eine Aufwärtswandlung auf ca. 160 V Gleichspannung vorgesehen. Die zur Verfügung stehende elektrische Leistung am Ausgang 122 beträgt ca. 800 W.

Der Wandler 120 ist dadurch ein Aufwärtswandler, welcher potentialgetrennt ist (galvanisch getrennt ist). Dadurch lässt sich, wie untenstehend noch näher erläutert, ein Anliegen der Wechselspannung der Wechselstromquelle 124 an dem ersten Anschluss 114 verhindern.

Im Betrieb mit der Wechselstromquelle 124 ist die Leistungsaufnahme des Elektromotors 27 bei einem konkreten Ausführungsbeispiel ca. 1200 W und im Gleichspannungsbetrieb mit der Gleichstromquelle 106 ca. 800 W.

Eine Filterabreinigung lässt sich auch im Gleichspannungsbetrieb durchführen, d. h. eine Filterabreinigungseinrichtung mit dem Elektromagnet 50 lässt sich entsprechend mit Energie versorgen, um einen entsprechenden Abreinigungsunterdruck zu erreichen und den Elektromagnet 50 anzusteuern.

Grundsätzlich kann bei einem Fehlerfall beim Betrieb mit der Wechselstromquelle 124 (insbesondere im Netzbetrieb) die entsprechende Spannung an Kontakten der Batterien 108, 110, d. h. an dem ersten Anschluss 114 bzw. dem Eingang 118 anliegen. Erfindungsgemäß ist es vorgesehen, dass der Wandler 120 potentialgetrennt ist (galvanisch getrennt ist). Dadurch wird gerade dieses Anliegen der Wechselspannung der Wechselstromquelle 124 verhindert, d. h. es wird ein Durchschlag von einer Wechselspannungsseite 136 auf eine Gleichspannungsseite 138 verhindert.

Im Gleichstrombetrieb, bei dem die Gleichstromquelle 106 (insbesondere über die Batterien 108, 110) die elektrische Energie für den oder die Verbraucher des Staubsaugers 10 bereitstellt, darf die an dem Ausgang 122 des Wandlers 120 anstehende Spannung nicht an dem dritten Anschluss 128 (und insbesondere am Netzstecker 140) anliegen. Dies wird durch entsprechende Ausbildung der Umschalteinrichtung 130 erreicht. Die Umschalteinrichtung 130 weist bezüglich Kontakten einen Sicherheitsabstand von in der Summe mindestens 8 mm auf. Der Sicherheitsabstand ist realisiert über eine Kriechstrecke (Kontaktabstand) 142 und eine Luftstrecke zwischen entsprechenden elektrischen Teilen (elektrischen Kontakten) der Bauteile 132, 134 der Umschalteinrichtung 130. Dieser Kontaktabstand 142 zwischen zugeordneten Kontakten 144, 146 an einem Bauteil 132 bzw. 134 beträgt mindestens 4 mm.

Der gesamte Sicherheitsabstand der Umschalteinrichtung 130 von mindestens 8 mm ist in dem gezeigten Ausführungsbeispiel dadurch realisiert, dass das erste Bauteil 132 eine Kriechstrecke von mindestens 4 mm aufweist und das zweite Bauteil ebenfalls eine Kriechstrecke von mindestens 4 mm aufweist.

Bei einer alternativen Ausführungsform ist nur ein einziges Bauteil der Umschalteinrichtung vorgesehen (welches dann auch Umschaltfunktionen hat), welches eine Kriechstrecke von mindestens 8 mm aufweist.

Ferner weist die Umschalteinrichtung 130 einen Sicherheitsabstand von mindestens 4 mm bezüglich der Luftstrecke auf. Individuelle Bauteile 132, 134 mit Luftstrecke weisen dabei eine Luftstrecke von mindestens 2 mm auf. Bei dem gezeigten Ausführungsbeispiel mit erstem Bauteil 132 und zweitem Bauteil 134 weisen diese jeweils eine Luftstrecke von mindestens 2 mm auf.

Bei einer alternativen Ausführungsform, bei der die Umschalteinrichtung 130 nur ein für den Sicherheitsabstand relevantes Bauteil wie ein Relais aufweist, muss die Luftstrecke an diesem Bauteil mindestens 4 mm betragen. (Damit beträgt auch die Summe aller Luftstrecken mindestens 4 mm.)

Bei einem Ausführungsbeispiel ist ein Träger 148 insbesondere in Form einer Platine vorgesehen, an welchem mindestens ein Teil der Komponenten der Energieversorgungsvorrichtung 100 angeordnet sind. Dieser Träger 148 kann dabei auch wie oben beschrieben die elektronische Steuerungseinrichtung 102 aufnehmen.

Zwischen entsprechenden Kontakten 144, 146 ist an dem Träger 148 eine Ausnehmung 150 gebildet. Die Ausnehmung 150 ist insbesondere durchgehend. Sie ist schlitzförmig und beispielsweise durch eine Ausfräsung an dem Träger 148 hergestellt. Diese Ausfräsung sorgt für einen Kontaktabstand (Kriechstrecke) von Anschlusskontakten von mindestens 4 mm.

Ferner ist eine Luftstrecke als Abstand von Schaltkontakten von mindestens 2 mm vorgesehen.

Ein entsprechender Sicherheitsabstand von 4 mm (mindestens) in der Kriechstrecke ist auch an dem zweiten Bauteil 134 vorgesehen. Dadurch bildet das erste Bauteil 132 die elektrische Basisisolierung und das zweite Bauteil 134 eine zusätzliche elektrische Isolierung.

Auf diese Weise wird effektiv in einem Fehlerfall ein Anliegen der hochgesetzten Gleichspannung der Gleichstromquelle 106 an dem Netzstecker 140 bzw. zweiten Anschluss 26 verhindert.

Insgesamt beträgt der Sicherheitsabstand der Umschalteinrichtung 130 bezüglich der Summe der Kriechstrecken mindestens 8 mm durch entsprechende Ausbildung der für den Sicherheitsabstand relevanten Bauteile 132, 134 der Umschalteinrichtung 130. Es ist dabei grundsätzlich vorgesehen, dass jeder Kontaktbereich der Umschalteinrichtung 130, an welchem eine Schaltung bezüglich Entkopplung des zweiten Anschlusses 126 von einem Verbraucher erfolgt, den entsprechenden Sicherheitsabstand von mindestens 4 mm aufweist.

Der Sicherheitsabstand der Umschalteinrichtung 130 beträgt bezüglich der Summe der Luftstrecken mindestens 4 mm durch entsprechende Ausbildung der für den Sicherheitsabstand relevanten Bauteile 132, 134 der Umschalteinrichtung 130. Es ist dabei grundsätzlich vorgesehen, dass jeder Kontaktbereich der Umschalteinrichtung 130, an welchem eine Schaltung bezüglich Entkopplung des zweiten Anschlusses 126 von einem Verbraucher erfolgt, der entsprechende Sicherheitsabstand bezüglich Luftstrecke von mindestens 2 mm vorliegt.

Durch die Energieversorgungsvorrichtung 100, welche insbesondere in einen Sauger bzw. Staubsauger 10 integriert ist, erhält man auf einfache und effektive Weise sowohl für einen Batteriebetrieb über die Gleichstromquelle 106 als auch für einen Netzbetrieb eine effektive Verhinderung eines Anliegens einer "falschen" Spannung; es wird verhindert, dass bei einem Netzbetrieb die Wechselspannung der Wechselstromquelle 124 an Batteriekontakten anliegen kann und dass bei einem Gleichstrombetrieb die transformierte Spannung der Gleichstromquelle 106 an dem dritten Anschluss 128 und insbesondere dem Netzstecker 140 anliegen kann.

### Bezugszeichenliste

- 10: Staubsauger
- 12: Schmutzsammelbehälter
- 14: Saugkopf
- 16: Saugeinlass
- 18: Saugschlauch
- 20: Saugauslass
- 21: Filtereinrichtung
- 22: Filter
- 24: Absaugleitung
- 25: Elektromotoreinrichtung
- 26: Saugaggregat
- 27: Elektromotor
- 28: Gebläse
- 30: Saugströmung
- 32: Schmutzseite
- 33: Fremdluftventileinrichtung
- 34: Fremdluftventil
- 36: Ventilhalterung
- 38: Ventilteller
- 40: Schließfeder
- 42: Filterhalterung
- 44: Anschlagfeder
- 46: Seitliche Öffnung
- 48: Reinseite
- 50: Elektromagnet
- 52: Ringraum
- 54: Führungshülse
- 56: Eisenplatte
- 58: Stirnkante
- 68: Batteriefach
- 70: Klappe
- 82: Taster
- 84: Erster Drucksensor
- 86: Zweiter Drucksensor
- 100: Energieversorgungsvorrichtung
- 102: Stromversorgungsleitung
- 104: Steuerungseinrichtung
- 106: Gleichstromquelle
- 108: Batterie
- 110: Batterie
- 114: erster Anschluss
- 116: Schalteinrichtung
- 116a: Schalter
- 116b: Schalter
- 118: Eingang
- 120: Wandler
- 122: Ausgang
- 124: Wechselstromquelle
- 126: zweiter Anschluss
- 128: dritter Anschluss
- 130: Umschalteinrichtung
- 132: erstes Bauteil
- 134: zweites Bauteil
- 136: Wechselspannungsseite
- 138: Gleichspannungsseite
- 140: Netzstecker
- 142: Kriechstrecke
- 144: Kontakt
- 146: Kontakt
- 148: Träger
- 150: Ausnehmung

## Patentansprüche

1. Energieversorgungsvorrichtung für einen Sauger (10), welcher wahlweise mit Gleichstrom oder Wechselstrom, insbesondere Netzstrom, betreibbar ist, umfassend einen ersten Anschluss (114), an welchen eine Gleichstromquelle (106) anschließbar oder angeschlossen ist, einen zweiten Anschluss (126), an welchen eine Wechselstromquelle (124) anschließbar oder angeschlossen ist, mindestens einen dritten Anschluss (128), an welchen ein oder mehrere Verbraucher (27; 50) des Saugers (10) anschließbar oder angeschlossen sind, einen potentialgetrennten Wandler (120), welcher eingangsseitig elektrisch wirksam mit dem ersten Anschluss (114) verbunden ist, und eine Umschalteinrichtung (130), welche mit einem Ausgang (122) des Wandlers (120) elektrisch wirksam verbunden ist, mit dem zweiten Anschluss (126) verbunden ist und mit dem mindestens einen Verbraucher (27; 50) verbunden ist, wobei durch die Umschalteinrichtung (130) schaltbar ist, ob der mindestens eine Verbraucher (27; 50) für die Energieversorgung wirksam mit dem Wandler (120) oder dem zweiten Anschluss (126) verbunden ist, und wobei die Umschalteinrichtung (130) ein oder mehrere Bauteile (132, 134) mit jeweiligem elektrischen Sicherheitsabstand aufweist und der Sicherheitsabstand eines solchen Bauteils (132; 134) bezüglich der Kriechstrecke mindestens 4 mm beträgt und die Summe der Kriechstrecken der Bauteile (132; 134) mindestens 8 mm beträgt.

2. Energieversorgungsvorrichtung nach Anspruch 1, **dadurch gekennzeichnet, dass** der Sicherheitsabstand bezüglich Luftstrecke eines Bauteils (132; 134) mindestens 2 mm beträgt und die Summe der Luftstrecken der Bauteile (132; 134) mindestens 4 mm beträgt.

3. Energieversorgungsvorrichtung nach Anspruch 1 oder 2, **dadurch gekennzeichnet, dass** bei einer Mehrzahl von Bauteilen (132; 134) mindestens zwei Bauteile (132, 134) bezogen auf den zweiten Anschluss (126) in Reihe geschaltet sind.

4. Energieversorgungsvorrichtung nach einem der vorangehenden Ansprüche, **dadurch gekennzeichnet, dass** die Umschalteinrichtung (130) mindestens ein Bauteil (132) aufweist, durch welches schaltbar ist, ob der dritte Anschluss (128) entweder in für die Energieversorgung wirksamer Verbindung mit dem zweiten Anschluss (126) oder dem Ausgang (122) des Wandlers (120) steht.

5. Energieversorgungsvorrichtung nach einem der vorangehenden Ansprüche, **dadurch gekennzeichnet, dass** die Umschalteinrichtung (130) mindestens ein Relais und/oder Schütz und/oder einen Schalter (134) umfasst.

6. Energieversorgungsvorrichtung nach einem der vorangehenden Ansprüche, **dadurch gekennzeichnet, dass** die Umschalteinrichtung (130) mindestens ein Bauteil (132) als elektrische Basisisolierung und mindestens ein weiteres Bauteil (134) als zusätzliche elektrische Isolierung aufweist, und insbesondere, dass das mindestens eine weitere Bauteil (134) eine Durchschaltfunktion ohne Umschaltfunktion hat.

7. Energieversorgungsvorrichtung nach einem der vorangehenden Ansprüche, **dadurch gekennzeichnet, dass** Kontakte (144, 146) der Umschalteinrichtung an einem Träger (148), insbesondere einer Platine, angeordnet sind und eine Kriechstrecke zwischen den Kontakten (144, 146) durch eine oder mehrere Ausnehmungen (150) zwischen den Kontakten (144, 146) und insbesondere durch eine oder mehrere durchgehende Ausnehmungen (150) an dem Träger (148) gebildet sind, und insbesondere, dass eine für eine Kriechstrecke maßgebende Abmessung der mindestens einen Ausnehmung (148) bezogen auf einen Abstand zwischen beabstandeten Kontakten (144, 146) mindestens 4 mm beträgt.

8. Energieversorgungsvorrichtung nach einem der vorangehenden Ansprüche, **dadurch gekennzeichnet, dass** der potentialgetrennte Wandler (120) eine Wechselspannungsseite (136) mit der Wechselstromquelle (124) von der Gleichstromquelle (106) trennt.

9. Energieversorgungsvorrichtung nach einem der vorangehenden Ansprüche, **dadurch gekennzeichnet, dass** die Umschalteinrichtung (130) mit dem Sicherheitsabstand eine Gleichspannungsseite (138) mit der Gleichstromquelle (106) von der Wechselstromquelle (124) trennt.

10. Energieversorgungsvorrichtung nach einem der vorangehenden Ansprüche, **dadurch gekennzeichnet, dass** der Wandler (120) eine Gleichspannung oder Wechselspannung von 100 V oder mehr bereitstellt und insbesondere eine Gleichspannung oder Wechselspannung von 140 V oder mehr für einen Abreinigungsvorgang an dem Sauger (10) bereitstellt.

11. Energieversorgungsvorrichtung nach einem der vorangehenden Ansprüche, **dadurch gekennzeichnet, dass** die Gleichstromquelle (106) eine wiederaufladbare Batterieeinrichtung ist.

12. Sauger, insbesondere Staubsauger, umfassend einen Saugeinlass (16), einen Schmutzsammelbehälter (12), eine Filtereinrichtung (21), eine Absaugleitung (24) und ein Saugaggregat (26), wobei der Schmutzsammelbehälter (12) über die Filtereinrichtung (21) und die Absaugleitung (24) mit dem Saugaggregat (26) in Strömungsverbindung steht und die Filtereinrichtung (21) vom Saugaggregat (26) mit Unterdruck beaufschlagt ist, **gekennzeichnet durch** eine Energieversorgungsvorrichtung gemäß einem der vorangehenden Ansprüche.

13. Sauger nach Anspruch 12, **gekennzeichnet durch** eine Abreinigungseinrichtung für die Filtereinrichtung (21).

14. Sauger nach Anspruch 12 oder 13, **dadurch gekennzeichnet, dass** ein Verbraucher des Saugers eine Elektromotoreinrichtung (27) des Saugaggregats (26) und/oder eine Abreinigungseinrichtung für die Filtereinrichtung (21) ist.

15. Sauger nach einem der Ansprüche 12 bis 14, **dadurch gekennzeichnet, dass** ein oder mehrere Energieverbraucher (27) des Saugers alternativ durch Gleichstrom oder Wechselstrom betreibbar sind.

## Claims

1. A power supply arrangement for a suction unit (10) which is selectively operable using direct current or alternating current, in particular mains current, including a first connection (114) to which a direct current source (106) is connectible or connected, a second connection (126) to which an alternating current source (124) is connectible or connected, at least one third connection (128) to which one or more consuming units (27; 50) of the suction unit (10) are connectible or connected, an electrically isolated converter (120) which is connected on the input side in electrically active manner to the first connection (114), and a switchover device (130) which is connected in electrically active manner to an output (122) of the converter (120), is connected to the second connection (126) and is connected to the at least one consuming unit (27; 50), wherein by means of the switchover device (130) it is selectable whether the at least one consuming unit (27; 50) is actively connected to the converter (120) or the second connection (126) for power supply, and wherein the switchover device (130) has one or more components (132, 134) each with an electrical safety clearance, and the safety clearance of such a component (132, 134) is at least 4 mm in respect of the creepage distance and the total of the creepage distances of the components (132, 134) is at least 8 mm.

2. A power supply arrangement according to Claim 1, **characterised in that** the safety clearance in respect of the air gap of a component (132; 134) is at least 2 mm and the total of the air gaps of the components (132; 134) is at least 4 mm.

3. A power supply arrangement according to Claim 1 or 2, **characterised in that**, where there is a plurality of components (132; 134), at least two components (132, 134) are connected in series in relation to the second connection (126).

4. A power supply arrangement according to one of the preceding claims, **characterised in that** the switchover device (130) has at least one component (132) by means of which it is selectable whether the third connection (128) is in connection in a manner effective for power supply either with the second connection (126) or with the output (122) of the converter (120).

5. A power supply arrangement according to one of the preceding claims, **characterised in that** the switchover device (130) includes at least one relay and/or a contactor and/or a switch (134).

6. A power supply arrangement according to one of the preceding claims, **characterised in that** the switchover device (130) has at least one component (132) as the electrical base insulation and at least one further component (134) as an additional electrical insulation and in particular **in that** the at least one further component (134) has a switch-through function with no switchover function.

7. A power supply arrangement according to one of the preceding claims, **characterised in that** contacts (144, 146) of the switchover device are arranged on a support (148), in particular a circuit board, and a creepage distance is formed between the contacts (144, 146) by one or more recesses (150) between the contacts (144, 146) and in particular by one or more recesses (150) passing right through the support (148), and in particular **in that** a dimension of the at least one recess (148) that is determinative for a creepage distance in respect of a spacing between spaced contacts (144, 146) is at least 4 mm.

8. A power supply arrangement according to one of the preceding claims, **characterised in that** the electrically isolated converter (120) isolates an alternating current voltage side (136) having the alternating current source (124) from the direct current source (106).

9. A power supply arrangement according to one of the preceding claims, **characterised in that** the switchover device (130) isolates a direct current voltage side (138) having the direct current source (106) from the alternating current source (124) by means of the safety clearance.

10. A power supply arrangement according to one of the preceding claims, **characterised in that** the converter (120) provides a direct current voltage or alternating current voltage of 100 V or more, and in particular provides a direct current voltage or alternating current voltage of 140 V or more for a cleaning procedure on the suction unit (10).

11. A power supply arrangement according to one of the preceding claims, **characterised in that** the direct current source (106) is a rechargeable battery unit.

12. A suction unit, in particular a vacuum cleaner, including a suction inlet (16), a dirt collection container (12), a filter device (21), a suction removal line (24) and a suction assembly (26), wherein the dirt collection device (12) is in flow connection with the suction assembly (26) by way of the filter device (21) and the suction removal line (24), and negative pressure from the suction assembly (26) acts on the filter device (21), **characterised by** a power supply arrangement according to one of the preceding claims.

13. A suction unit according to Claim 12, **characterised by** a cleaning device for the filter device (21).

14. A suction unit according to Claim 12 or 13, **characterised in that** a consuming unit of the suction unit is an electric motor device (27) of the suction assembly (26) and/or a cleaning device for the filter device (21).

15. A suction unit according to one of Claims 12 to 14, **characterised in that** one or more power consuming units (27) of the suction unit are operable alternatively by direct current or alternating current.

## Revendications

1. Dispositif d'alimentation en énergie pour un aspirateur (10), lequel peut fonctionner sélectivement avec du courant continu ou du courant alternatif, en particulier avec un courant de secteur, ledit dispositif comprenant un premier raccordement (114) auquel une source de courant continu (106) peut être raccordée ou est raccordée, un deuxième raccordement (126), auquel une source de courant alternatif (124) peut être raccordée ou est raccordée, au moins un troisième raccordement (128), auquel un ou plusieurs consommateurs (27 ; 50) de l'aspirateur (10) peuvent être raccordés ou sont raccordés, un transducteur à séparation de potentiel (120), lequel est relié électriquement et fonctionnellement côté entrée au premier raccordement (114), et un dispositif de commutation (130), lequel est relié électriquement et fonctionnellement à une sortie (122) du transducteur (120), est relié au deuxième raccordement (126) et est relié au ou aux consommateurs (27 ; 50), le dispositif de commutation (130) permettant d'effectuer une commutation si le ou les consommateurs (27 ; 50) destinés à l'alimentation en énergie sont reliés fonctionnellement au transducteur (120) ou au deuxième raccordement (126), et le dispositif de commutation (130) comportant un ou plusieurs éléments (132, 134) présentant une distance de sécurité électrique respective et la distance de sécurité d'un tel élément (132 ; 134) par rapport à la ligne de fuite atteignant au moins 4 mm et la somme des lignes de fuite des éléments (132 ; 134) atteignant au moins 8 mm.

2. Dispositif d'alimentation en énergie selon la revendication 1, **caractérisé en ce que** la distance de sécurité par rapport à l'entrefer d'un élément (132 ; 134) atteint au moins 2 mm et la somme des entrefers des éléments (132 ; 134) atteint au moins 4 mm.

3. Dispositif d'alimentation en énergie selon la revendication 1 ou 2, **caractérisé en ce que**, pour une pluralité d'éléments (132 ; 134), au moins deux éléments (132, 134) sont montés en série par rapport au deuxième raccordement (126).

4. Dispositif d'alimentation en énergie selon l'une quelconque des revendications précédentes, **caractérisé en ce que** le dispositif de commutation (130) comprend au moins un élément (132) permettant d'effectuer une commutation si le troisième raccordement (128) est en liaison fonctionnelle pour l'alimentation en énergie soit avec le deuxième raccordement (126) soit avec la sortie (122) du transducteur (120).

5. Dispositif d'alimentation en énergie selon l'une quelconque des revendications précédentes, **caractérisé en ce que** le dispositif de commutation (130) comprend au moins un relais et/ou un contacteur et/ou un commutateur (134).

6. Dispositif d'alimentation en énergie selon l'une quelconque des revendications précédentes, **caractérisé en ce que** le dispositif de commutation (130) comprend au moins un élément (132) réalisé sous la forme d'une isolation de base électrique et au moins un autre élément (134) réalisé sous la forme d'une isolation électrique supplémentaire, et en particulier en ce que l'élément ou les autres éléments (134) présentent une fonction d'interconnexion sans fonction de commutation.

7. Dispositif d'alimentation en énergie selon l'une quelconque des revendications précédentes, **caractérisé en ce que** les contacts (144, 146) du dispositif de commutation sont agencés sur un support (148), en particulier une platine, et une ligne de fuite entre les contacts (144, 146) est formée par un ou plusieurs évidements (150) entre les contacts (144, 146) et en particulier par un ou plusieurs évidements (150) traversants sur le support (148), et en particulier **en ce qu'**une dimension, déterminante pour une ligne de fuite, de l'évidement ou des évidements (148), rapporté à une distance entre des contacts (144, 146) voisins, atteint au moins 4 mm.

8. Dispositif d'alimentation en énergie selon l'une quelconque des revendications précédentes, **caractérisé en ce que** le transducteur à séparation de potentiel (120) sépare un côté de tension alternative (136) présentant la source de courant alternatif (124) de la source de courant continu (106).

9. Dispositif d'alimentation en énergie selon l'une quelconque des revendications précédentes, **caractérisé en ce que** le dispositif de commutation (130) comprenant la distance de sécurité sépare un côté de tension continue (138) comprenant la source de courant continu (106) de la source de courant alternatif (124).

10. Dispositif d'alimentation en énergie selon l'une quelconque des revendications précédentes, **caractérisé en ce que** le transducteur (120) fournit une tension continue ou une tension alternative supérieure ou égale à 100 V et en particulier une tension continue ou une tension alternative supérieure ou égale à 140 V pour une opération de nettoyage sur l'aspirateur (10).

11. Dispositif d'alimentation en énergie selon l'une quelconque des revendications précédentes, **caractérisé en ce que** la source de courant continu (106) comprend un système de batterie rechargeable.

12. Aspirateur, en particulier aspirateur à poussières, comprenant une entrée d'aspiration (16), un récipient collecteur de saletés (12), un système de filtre (21), une conduite d'aspiration (24) et un groupe d'aspiration (26), le récipient collecteur de saletés (12) étant en liaison fluidique avec le groupe d'aspiration (26) par l'intermédiaire du système de filtre (21) et de la conduite d'aspiration (24) et le système de filtre (21) étant soumis à un vide par le groupe d'aspiration (26), **caractérisé par** un dispositif d'alimentation en énergie selon l'une quelconque des revendications précédentes.

13. Aspirateur selon la revendication 12, **caractérisé par** un système de nettoyage pour le système de filtre (21).

14. Aspirateur selon la revendication 12 ou 13, **caractérisé en ce qu'**un consommateur de l'aspirateur est un système de moteur électrique (27) du groupe d'aspiration (26) et/ou un système de nettoyage pour le système de filtre (21).

15. Aspirateur selon l'une quelconque des revendications 12 à 14, **caractérisé en ce qu'**un ou plusieurs consommateurs d'énergie (27) de l'aspirateur peuvent être actionnés en alternance par un courant continu ou un courant alternatif.
